(19) Europäisches Patentamt
European Patent Office
Office européen des brevets

(11) **EP 4 310 959 A1**

(12) **EUROPEAN PATENT APPLICATION**
published in accordance with Art. 153(4) EPC


(43) Date of publication:
**24.01.2024 Bulletin 2024/04**

(21) Application number: **22771350.0**

(22) Date of filing: **14.03.2022**

(51) International Patent Classification (IPC):
***H01M 4/62*** *(2006.01)* ***C08L 1/00*** *(2006.01)*
***C08L 43/02*** *(2006.01)* ***H01M 4/13*** *(2010.01)*
***H01M 4/133*** *(2010.01)* ***H01M 4/36*** *(2006.01)*

(52) Cooperative Patent Classification (CPC):
**C08L 1/00; C08L 43/02; H01M 4/13; H01M 4/133; H01M 4/36; H01M 4/62;** Y02E 60/10

(86) International application number:
**PCT/JP2022/011175**

(87) International publication number:
**WO 2022/196604 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2021 JP 2021041799**



(71) Applicants:
- **Japan Advanced Institute of Science and Technology**
**Ishikawa 923-1292 (JP)**
- **Maruzen Petrochemical Co., Ltd.**
**Tokyo 104-8502 (JP)**

(72) Inventors:
- **MATSUMI, Noriyoshi**
**Nomi-shi, Ishikawa 923-1292 (JP)**
- **TAKAMORI, Noriyuki**
**Nomi-shi, Ishikawa 923-1292 (JP)**
- **YAMAZAKI,Tadashi**
**Ichihara-shi, Chiba 290-8503 (JP)**

(74) Representative: **Elkington and Fife LLP**
**Prospect House**
**8 Pembroke Road**
**Sevenoaks, Kent TN13 1XR (GB)**


(54) **BINDER COMPOSITION FOR NEGATIVE ELECTRODES OF LITHIUM ION SECONDARY BATTERIES, NEGATIVE ELECTRODE FOR LITHIUM ION SECONDARY BATTERIES, AND LITHIUM ION SECONDARY BATTERY**


(57) Provided is a binder composition for a negative electrode which can achieve both a high capacity and an excellent capacity retention rate of a lithium-ion secondary battery. The binder composition for a lithium-ion secondary battery negative electrode of this invention is characterized by containing a vinylphosphonic acid- or vinylphosphonic acid ester-derived vinyl phosphorus polymer and a cellulose-based water-soluble polymer.


EP 4 310 959 A1

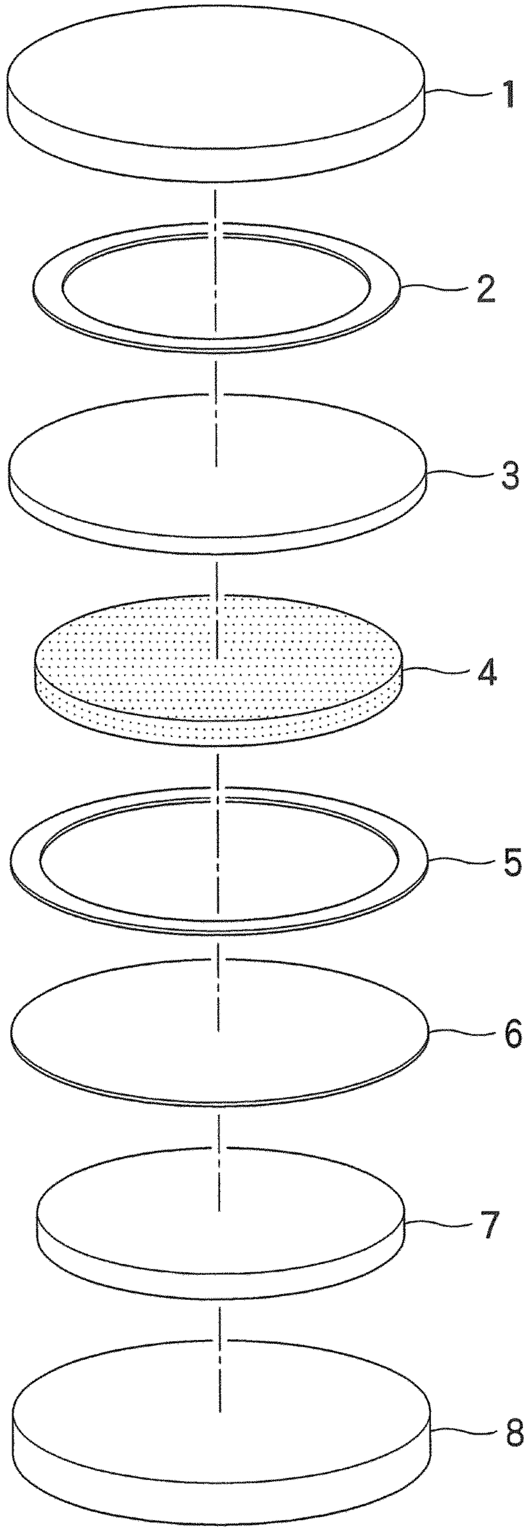


Fig. 1

## Description

## BACKGROUND OF THE INVENTION

### Field of the Invention

The present invention relates to a binder composition for a lithium-ion secondary battery negative electrode. The present invention also relates to a lithium-ion secondary battery negative electrode using the binder composition. The present invention further relates to a lithium-ion secondary battery comprising the negative electrode.

### Background Art

High expectations are placed on the development of lithium-ion secondary batteries due to their high voltage and high capacity. Especially in recent years, various materials used in batteries have been improved, such as positive electrode active materials, negative electrode active materials, non-aqueous electrolytic solutions, and binders used in positive and negative electrodes, which are involved in battery reactions.

In particular, in the field of eco-friendly vehicles, the number of vehicles equipped with lithium-ion secondary batteries for driving is increasing, and demands for such lithium-ion secondary batteries are expanding. To increase the capacity of lithium-ion secondary batteries, an improvement in energy density is required. Various materials have been studied for both positive and negative electrodes. However, as the positive electrode has a resource problem of Co and the like, an improvement is desired on the negative electrode side. At present, graphite is widely used as a negative electrode active material for lithium-ion secondary batteries. As a negative electrode active material for the purpose of increasing capacity, Si-based materials (such as Si and SiO) are attracting attention from the viewpoint of weight energy density and volume energy density.

Meanwhile, Si-based negative electrodes are expected to have a higher capacity but have the problem of large volume changes during charging and discharging. Graphite expands by about 110% when fully charged, while pure Si alone expands by about 400%. During the charging and discharging of a lithium-ion secondary battery, a solid electrolyte interphase, which is a non-conductor as a reaction product with an electrolytic solution, is formed on the surface of an active material. In a case in which the volume change during charge/discharge is large, the solid electrolyte interphase, which is a hard and brittle oxide, cannot follow the volume change and repeats desorption and reprecipitation. To solve such problems, a lithium-ion secondary battery negative electrode containing polyacrylic acid as a negative electrode binder has been proposed (see Patent Literature 1). In addition, a lithium-ion secondary battery negative electrode containing polyvinylidene fluoride as a negative electrode binder has been proposed (see Patent Literature 2).

### Citation List

#### Patent Literature

Patent Literature 1: WO2015/159935

Patent Literature 2: Japanese Patent No. 6198687


## SUMMARY OF THE INVENTION

### Technical Problem

However, even when the negative electrode binders described in Patent Literature 1 and 2 are used, both the high capacity and the excellent capacity retention rate of lithium-ion secondary batteries have not been achieved.

### Solution to Problem

As a result of intensive studies to solve the above-described problems, the present inventors found that the problems can be solved by combining a vinyl phosphorus polymer and a cellulose-based water-soluble polymer as a negative electrode binder composition. This has led to the completion of the present invention.

Specifically, according to the present invention, the following inventions are provided.

[1] A binder composition for a lithium-ion secondary battery negative electrode, which is characterized by containing

a vinylphosphonic acid- or vinylphosphonic acid ester-derived vinyl phosphorus polymer and a cellulose-based water-soluble polymer.

[2] The binder composition for a lithium-ion secondary battery negative electrode according to [1], wherein the vinyl phosphorus polymer is represented by the following Formula (1):

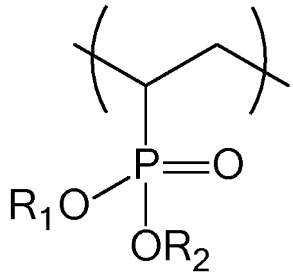

(1)

(in Formula (1), $R_1$ and $R_2$ each independently represent a hydrogen atom or a substituted or unsubstituted alkyl group having from 1 to 6 carbon atoms, provided that when $R_1$ and $R_2$ are alkyl groups, $R_1$ and $R_2$ may form a ring together with an oxygen atom and a phosphorus atom in Formula (1)).

[3] The binder composition for a lithium-ion secondary battery negative electrode according to [1] or [2], wherein the vinyl phosphorus polymer is polyvinylphosphonic acid or dimethyl polyvinylphosphonate.

[4] The binder composition for a lithium-ion secondary battery negative electrode according to any one of [1] to [3], wherein the vinyl phosphorus polymer is polyvinylphosphonic acid.

[5] The binder composition for a lithium-ion secondary battery negative electrode according to any one of [1] to [4], wherein the cellulose-based water-soluble polymer is carboxymethyl cellulose.

[6] A lithium-ion secondary battery negative electrode comprising a negative electrode active material, a binder, and a conductive aid, wherein

the negative electrode active material is composed of any one of a carbon material, a silicon compound, and a mixture of a carbon material and a silicon compound,
the binder is composed of the binder composition for a lithium-ion secondary battery negative electrode according to any one of [1] to [5],
and
the conductive aid is fine carbonaceous particles.

[7] The lithium-ion secondary battery negative electrode according to [6], wherein the conductive aid is acetylene black.

[8] A lithium-ion secondary battery comprising a positive electrode and the negative electrode according to [6] or [7].

Advantageous Effects of Invention

According to the present invention, a binder composition for a negative electrode which can achieve both a high capacity and an excellent capacity retention rate (charge-discharge cycle characteristics) of a lithium-ion secondary battery can be provided. In addition, a lithium-ion secondary battery negative electrode using the binder composition for a negative electrode can be provided. Further, a lithium-ion secondary battery comprising the lithium-ion secondary battery negative electrode can be provided.

## BRIEF DESCRIPTION OF THE DRAWINGS

FIG. 1 is a schematic structural diagram of a half-cell used in a charge-discharge test in Examples.

## DETAILED DESCRIPTION OF THE INVENTION

[Binder Composition for Lithium-Ion Secondary Battery Negative Electrode]

The binder composition for a lithium-ion secondary battery negative electrode of the present invention is characterized by containing a vinyl phosphorus polymer and a cellulose-based water-soluble polymer. As a vinyl phosphorus polymer and a cellulose-based water-soluble polymer are used in combination, when the binder composition is used for

a lithium-ion secondary battery negative electrode, both a high capacity and an excellent capacity retention rate (charge-discharge cycle characteristics) of a lithium-ion secondary battery can be achieved. The components constituting the binder composition will be described in detail below.

(Vinyl Phosphorus Polymer)

The vinyl phosphorus polymer in the present invention is a vinylphosphonic acid- or vinylphosphonic acid ester-derived polymer. As such a vinyl phosphorus polymer, a polymer represented by the following Formula (1) can be used:

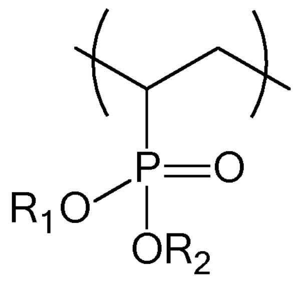

(1)

(in Formula (1), $R_1$ and $R_2$ each independently represent a hydrogen atom or a substituted or unsubstituted alkyl group having from 1 to 6 carbon atoms, provided that when $R_1$ and $R_2$ are alkyl groups, $R_1$ and $R_2$ may form a ring together with an oxygen atom and a phosphorus atom in Formula (1)). Examples of alkyl groups include methyl, ethyl, propyl, and butyl groups.

Specific examples of the polymer represented by Formula (1) include polyvinylphosphonic acid and polyvinylphosphonic acid ester. Examples of polyvinylphosphonic acid ester include dialkyl polyvinylphosphonate such as dimethyl polyvinylphosphonate. It is preferable to use polyvinylphosphonic acid among these. These vinyl phosphorus polymers may be used singly or in combination of two or more.

The weight average molecular weight (Mw) of a vinyl phosphorus polymer is not particularly limited but is within a range of, for example, from 3,000 to 300,000, preferably from 5,000 to 200,000, particularly preferably from 7,500 to 100,000. The weight average molecular weight (Mw) can be measured by gel permeation chromatography (GPC).

(Method of Producing Vinyl Phosphorus Polymer)

The method of producing a vinyl phosphorus polymer is not particularly limited. A vinyl phosphorus polymer can be produced by a conventionally known method. One embodiment of the method of producing a vinyl phosphorus polymer will be described.

First, one embodiment of the method of producing a vinylphosphonic acid ester-derived polymer (polyvinylphosphonic acid ester) will be described. For example, in the method of producing polyvinylphosphonic acid diester, a polyvinylphosphonic acid diester can be produced by anionic polymerization from a monomer component containing a vinylphosphonic acid diester as a main component in the presence of an anionic polymerization initiator. In addition, an aliphatic ether can be used as a polymerization solvent, although not particularly limited.

Examples of an anionic polymerization initiator in anionic polymerization include basic organometallic compounds, including: organolithium compounds such as methyllithium, ethyllithium, n-butyllithium, sec-butyllithium, t-butyllithium, and hexyllithium; and organomagnesium compounds (Grignard reagents) such as MeMgBr, EtMgBr, t-BuMgBr, t-BuMgCl, and PhMgBr.

Examples of an aliphatic ether used as a polymerization solvent in anionic polymerization include aliphatic ethers having about 2 to 10 carbon atoms such as diethyl ether, dipropyl ether, methyl-tert-butyl ether (MTBE), ethyl-tert-butyl ether (ETBE), dibutyl ether, diisoamyl ether, hexyl methyl ether, octyl methyl ether, cyclopentyl methyl ether (CPME), and dicyclopentyl ether.

The form of anionic polymerization in the present invention is not particularly limited; however, the dropping polymerization method, in which a monomer component solution containing dimethyl vinylphosphonate dissolved in the polymerization solvent is maintained at a predetermined temperature, and a polymerization initiator is added dropwise thereto, is preferable. Anionic polymerization is preferably carried out under high vacuum or under an inert gas atmosphere such as nitrogen, argon, helium, or the like.

Polymerization conditions for anionic polymerization are not particularly limited; however, the polymerization temperature is usually from -80°C to 100°C, preferably from -20°C to 60°C, more preferably from 0°C to 50°C. The polymerization time is usually from 0.5 to 24 hours, preferably from 1 to 12 hours, more preferably from 1.5 to 6 hours.

In anionic polymerization, the polymerization reaction can be terminated by adding a polymerization terminator to a reaction mixture at the stage where a polymer of the desired molecular weight is formed. Examples of a polymerization terminator that can be used include protic compounds such as water, methanol, isopropanol, acetic acid, and a methanol solution of hydrochloric acid. After the polymerization reaction is terminated, the desired polyvinylphosphonic acid diester can be separated and obtained from the reaction mixture.

Further, polyvinylphosphonic acid can be obtained by hydrolyzing polyvinylphosphonic acid diester obtained by the above-described method in the presence of acid. A polymer recovered as a solid from the polymerization solution or an aqueous polymer solution obtained by contacting the polymerization solution with water to extract the polyvinylphosphonic acid diester to the aqueous phase side can be used as polyvinylphosphonic acid diester.

As the acid used for hydrolysis, those usually used for hydrolysis of phosphoric acid esters can be used, and any one of inorganic, organic, and solid acids can be used. Inorganic acids such as sulfuric acid, hydrochloric acid and phosphoric acid are preferable from the viewpoint of reactivity.

Hydrolysis is usually carried out in a solvent consisting of water, a hydrophilic solvent, or a mixed solvent thereof. Examples of a hydrophilic solvent include: polyhydric alcohols such as ethylene glycol, propylene glycol, and glycerin; and glycol ether solvents such as cellosolve, methyl cellosolve, ethyl cellosolve, carbitol, methyl carbitol, Ethyl carbitol, butyl carbitol, propylene glycol monomethyl ether, propylene glycol monoethyl ether, dipropylene glycol monomethyl ether, dipropylene glycol monoethyl ether, triethylene glycol monomethyl ether, and triethylene glycol monoethyl ether.

The reaction temperature in hydrolysis is not particularly limited; however, it is selected from a range of usually from 80°C to 100°C, preferably from 90°C to 100°C, more preferably from 95°C to 100°C for water. In addition, the reaction time may be selected as appropriate in consideration of the reaction temperature. The reaction time is within a range of usually from 2 to 24 hours, preferably from 4 to 16 hours, more preferably from 6 to 8 hours.

Next, one embodiment of the method of producing a vinylphosphonic acid-derived polymer (polyvinylphosphonic acid) will be described. For example, in the method of producing polyvinylphosphonic acid, a polyvinylphosphonic acid can be produced by radical polymerization from a monomer component containing a vinylphosphonic acid as a main component in the presence of a radical polymerization initiator. In the case of radical polymerization, a polymerization solvent is not particularly limited, and water or a mixed solvent of water and an aqueous medium can be used.

A radical polymerization initiator in the radical polymerization of polyvinylphosphonic acid is not particularly limited; however, a water-soluble polymerization initiator that generates radicals by heat is preferable. Examples of a radical polymerization initiator include: azo polymerization initiators such as 2,2'-azobis[2-(2-imidazolin-2-yl)propane]dihydrochloride, 2,2'-azobis(2-methylpropionamidine) dihydrochloride, 2,2'-azobis[N-(2-carboxyethyl)-2-methylpropionamidine]tetrahydrate, 2,2'-azobis[2-(2-imidazolin-2-yl)propane], 2,2'-azobis[2-methyl-N-(2-hydroxyethyl)propionamide], and 4,4'-azobis(4-cyanovaleric acid); and organic peroxides such as cumene hydroperoxide, di-t-butyl peroxide, t-butyl hydroperoxide, and t-butyl peroxyacetate. The radical polymerization initiators may be used singly or in combination of two or more.

Examples of an aqueous medium used as a polymerization solvent in radical polymerization include: water; monohydric alcohol solvents such as methanol, ethanol, and isopropanol; polyhydric alcohol solvents such as ethylene glycol; and amide solvents such as N,N-dimethylformamide, which may be used singly or in combination of two or more. In the case of a mixed solvent, water is preferably 50% (v/v) or more with respect to the total volume of the aqueous medium. Among these aqueous media, one or two or more mixed solvents selected from water, water and a monohydric alcohol solvent, a polyhydric alcohol solvent, and an amide solvent are preferable, and water is more preferable.

The form of radical polymerization in the present invention is not particularly limited; however, the dropping polymerization method, in which a monomer component solution containing vinylphosphonic acid dissolved in the polymerization solvent is maintained at a predetermined temperature, and a polymerization initiator is added dropwise thereto, is preferable. Radical polymerization is preferably carried out under high vacuum or under an inert gas atmosphere such as nitrogen, argon, helium, or the like.

Polymerization conditions for radical polymerization are not particularly limited; however, the polymerization temperature is usually from 40°C to 100°C, preferably from 50°C to 90°C, more preferably from 60°C to 80°C. The polymerization time is usually from 1 to 24 hours, preferably from 2 to 18 hours, more preferably from 4 to 12 hours.

(Cellulose-Based Water-Soluble Polymer)

Examples of the cellulose-based water-soluble polymer can include carboxymethyl cellulose (CMC), methyl cellulose (MC), ethyl cellulose (EC), hydroxyethyl cellulose (HEC), and hydroxypropyl cellulose (HPC). Among these, carboxymethyl cellulose is preferable. These cellulose-based water-soluble polymers may be used singly or in combination of two or more.

The content of the vinyl phosphorus polymer in the binder composition is preferably 50% by mass or more and 95% by mass or less, more preferably 60% by mass or more and 90% by mass or less, still more preferably 70% by mass or more and 85% by mass or less with respect to the total amount of the vinyl phosphorus polymer and the cellulose-based water-soluble polymer. As long as the content of the vinyl phosphorus polymer is within this range, the capacity and capacity retention rate of the negative electrode can be further improved when used for a lithium-ion secondary battery negative electrode.

[Lithium-Ion Secondary Battery Negative Electrode]

The lithium-ion secondary battery negative electrode of the present invention comprises a negative electrode active material, a binder composition, and a conductive aid. Each component will be described in detail below.

(Binder Composition)

The above-described binder composition for a lithium-ion secondary battery negative electrode can be used as a binder composition. Details are as described above. The content of the binder composition in the negative electrode is preferably 10% by mass or more and 50% by mass or less, more preferably 15% by mass or more and 45% by mass or less, still more preferably 20% by mass or more and 40% by mass or less with respect to the total amount of the negative electrode active material, the binder composition, and the conductive aid. As long as the content of the binder composition in the negative electrode is within this range, the capacity and capacity retention rate of the negative electrode can be further improved when used for a lithium-ion secondary battery negative electrode.

(Negative Electrode Active Material)

The negative electrode active material is composed of any one of a carbon material, a silicon compound, and a mixture of a carbon material and a silicon compound, It is preferable to use a compound represented by SiOx as a silicon compound. In SiOx, x is preferably a number from 0.5 to 1.5, more preferably 1. A compound represented by SiOx has a small degree of expansion and contraction among silicon-based materials. Therefore, it is possible to reduce the content of a carbon material in the negative electrode active material, which is blended to alleviate the expansion and contraction of the silicon compound. Accordingly, the capacity of the lithium-ion secondary battery can be increased. In addition, the silicon compound may be A compound obtained by coating particles of the above-described compound represented by Formula SiOx with carbon such as nanocarbon.

The silicon compound is preferably powdery, more preferably particulate. For example, the average particle size of the silicon compound is preferably 30 μm or less, more preferably 20 μm or less, still more preferably 10 μm or less, and yet still more preferably 5 μm or less. By using such a finely powdered silicon compound, pulverization due to the expansion and contraction of the silicon compound is suppressed. In addition, the lower limit of the average particle size of the silicon compound is not particularly limited but can be 0.5 μm. The average particle size means the particle size (D50) at 50% volume integration in the particle size distribution of the silicon compound determined by the laser diffraction scattering method. In addition, the silicon compound can be pulverized by a known method using a ball mill or the like such that the average particle size can be adjusted to a desired value.

It is preferable to use graphite as a carbon material. Graphite is one of the allotropes of carbon and is a thermodynamically stable phase under normal pressure. Examples of graphite include natural graphite and artificial graphite. Natural graphite is naturally occurring graphite. Examples of natural graphite include flake graphite, massive graphite, and earthy graphite. Meanwhile, artificial graphite is a material in which a graphite structure is developed by further heat-treating a carbon material made by thermal decomposition and carbonization of an organic compound to a high temperature of 2500°C or more.

The average particle size of graphite is preferably from 1 to 30 μm. When the average particle size of graphite is from 1 to 30 μm, graphite particles can be interposed between the particles of the silicon compound, and the expansion and contraction of the silicon compound can be sufficiently alleviated. From such a viewpoint, the average particle size of graphite is more preferably from 2 to 20 μm, still more preferably from 3 to 10 μm. The average particle size means the particle size (D50) at 50% volume integration in the particle size distribution of graphite determined by the laser diffraction scattering method. In addition, graphite can be pulverized by a known method using a ball mill or the like such that the average particle size can be adjusted to a desired value.

In a case in which the negative electrode active material is a mixture of the carbon material and the silicon compound, the content of the silicon compound in the negative electrode active material is preferably 20% by mass or more and 80% by mass or less, more preferably 25% by mass or more and 75% by mass or less, still more preferably 30% by mass or more and 70% by mass or less with respect to the total amount of the silicon compound and the carbon material. In addition, the content of the carbon material in the negative electrode active material is preferably 20% by mass or more and 80% by mass or less, more preferably 25% by mass or more and 75% by mass or less, still more preferably 30% by mass or more and 70% by mass or less with respect to the total amount of the silicon compound and the carbon material. As long as the content of the silicon compound and the carbon material in the negative electrode

active material is within this range, the capacity and capacity retention rate of the negative electrode can be further improved when used for a lithium-ion secondary battery negative electrode.

The content of the negative electrode active material in the negative electrode is preferably 30% by mass or more and 80% by mass or less, more preferably 35% by mass or more and 75% by mass or less, still more preferably 40% by mass or more and 70% by mass or less with respect to the total amount of the negative electrode active material, the binder composition, and the conductive aid. As long as the content of the negative electrode active material in the negative electrode is within this range, the capacity and capacity retention rate of the negative electrode can be further improved when used for a lithium-ion secondary battery negative electrode.

(Conductive Aid)

As the conductive aid, a material having higher conductivity than the silicon compound is used. Specific examples of the conductive aid include acetylene black, ketjen black, carbon nanotube, and carbon rod. These conductive aids may be used singly or in combination of two or more.

The content of the conductive aid in the negative electrode is preferably 1% by mass or more and 30% by mass or less, more preferably 5% by mass or more and 25% by mass or less, still more preferably 10% by mass or more and 20% by mass or less with respect to the total amount of the negative electrode active material, the binder composition, and the conductive aid. As long as the content of the conductive aid in the negative electrode is within this range, the capacity and capacity retention rate of the negative electrode can be further improved when used for a lithium-ion secondary battery negative electrode.

(Current Collector)

The lithium-ion secondary battery negative electrode may further comprise a current collector. In a case in which the lithium-ion secondary battery negative electrode further comprises a current collector, a mixture of the negative electrode active material, the binder composition, and the conductive aid (negative electrode composition) may be layered on at least one surface of the current collector.

Examples of a material constituting the current collector (electrode current collector) include conductive metals such as copper, aluminum, titanium, nickel, and stainless steel. Among these, copper or aluminum is preferable, and copper is more preferable. In general, a current collector consists of a metal foil. The thickness of the current collector is not particularly limited but is preferably from 1 to 50 μm.

[Method of Producing Lithium-Ion Secondary Battery Negative Electrode]

The method of producing a lithium-ion secondary battery negative electrode is not particularly limited. A lithium-ion secondary battery negative electrode can be produced by a conventionally known method. One embodiment of the method of producing a lithium-ion secondary battery negative electrode will be described. A lithium-ion secondary battery negative electrode can be produced by, for example, coating a surface of a current collector with a negative electrode composition and drying the coated negative electrode composition.

The negative electrode composition contains the negative electrode active material, the binder, and the conductive aid, and may optionally contain a solvent, other components, and the like. Water is preferably used as a solvent in the negative electrode composition. The binder can be easily dissolved with water in the negative electrode composition. The solid content concentration of the negative electrode composition is preferably 5% by mass or more and 75% by mass or less, more preferably 20% by mass or more and 65% by mass or less.

A negative electrode can be formed by coating a surface of the current collector with the negative electrode composition, followed by drying. Examples of the method of coating a surface of the current collector with the negative electrode composition include, but are not particularly limited to, the dip coating method, the spray coating method, the roll coating method, the doctor blade method, the bar coating method, the gravure coating method, and the screen printing method. Among these, from the viewpoint of uniformly applying the negative electrode composition, the bar coating method or the gravure coating method is preferable.

In addition, the drying temperature is not particularly limited as long as the solvent can be removed but is, for example, from 40°C to 120°C, preferably from 50°C to 90°C. The drying time is not particularly limited but is, for example, from 30 seconds to 10 minutes.

[Lithium-Ion Secondary Battery]

The lithium-ion secondary battery of the present invention comprises the above-described lithium-ion secondary battery negative electrode. Specifically, the lithium-ion secondary battery of the present invention comprises positive

and negative electrodes placed opposite to each other and further comprises preferably a separator placed between the positive and negative electrodes.

(Positive Electrode)

The lithium-ion secondary battery positive electrode is not particularly limited, and a conventionally known positive electrode can be used. The positive electrode comprises, for example, a positive electrode active material, a positive electrode binder, and a current collector.

Examples of the positive electrode active material include a lithium metal oxide compound. Examples of a lithium metal oxide compound include Lithium cobaltate ($LiCoO_2$), lithium nickelate ($LiNiO_2$), and lithium manganate ($LiMn_2O_4$). In addition, olivine-type lithium iron phosphate ($LiFePO_4$) and the like may be exemplified. Further, a plurality of metals other than lithium may be used. A nickel-cobalt-manganese (NCM)-based oxide, a nickel-cobalt-aluminum (NCA)-based oxide, and the like, which are referred to as ternary systems, may also be used. These positive electrode active materials may be used singly or in combination of two or more.

Examples of a positive electrode binder include fluorine-containing resins such as polyvinylidene fluoride (PVDF), polyvinylidene fluoride-hexafluoropropylene copolymer (PVDF-HFP), and polytetrafluoroethylene (PTFE), acrylic resins such as polymethyl acrylate (PMA) and polymethyl methacrylate (PMMA), polyvinyl acetate, polyimide (PI), polyamide (PA), polyvinyl chloride (PVC), polyethernitrile (PEN), polyethylene (PE), polypropylene (PP), polyacrylonitrile (PAN), acrylonitrile-butadiene rubber, styrene-butadiene rubber, poly(meth)acrylic acid, carboxymethyl cellulose (CMC), hydroxyethyl cellulose, and polyvinyl alcohol. These positive electrode binders may be used singly or in combination of two or more.

A material that forms a current collector is the same as the compound used for the above-described negative electrode current collector, or preferably aluminum or copper, more preferably aluminum is used.

(Separator)

Providing the lithium-ion secondary battery with a separator effectively prevents a short circuit between the positive and negative electrodes. The separator is not particularly limited, and a conventionally known lithium-ion secondary battery separator can be used. Examples of the separator include a porous polymer membrane, non-woven fabric, and glass fiber. Among these, a porous polymer membrane is preferable. Examples of the porous polymer membrane include an olefin porous film.

The lithium-ion secondary battery may have a multi-layer structure in which a plurality of negative electrodes and a plurality of positive electrodes are layered. In this case, the negative electrodes and the positive electrodes may be alternately provided along the layer-stacking direction. In a case in which the separator is used, the separator may be placed between a negative electrode and a positive electrode.

In the lithium-ion secondary battery, the negative and positive electrodes described above or the negative and positive electrodes and the separator described above are housed in a battery cell. The battery cell may be of rectangular type, cylindrical type, laminate type, or the like.

(Electrolyte)

The lithium-ion secondary battery comprises an electrolyte. The electrolyte is not particularly limited, and conventionally known electrolytes used in lithium-ion secondary batteries may be used. An electrolytic solution, for example, is used as the electrolyte.

As the electrolytic solution, an electrolytic solution containing an organic solvent and an electrolyte salt can be used. Examples of an organic solvent include polar solvents such as ethylene carbonate, propylene carbonate, dimethyl carbonate, $\gamma$-butyrolactone, sulfolane, dimethylsulfoxide, acetonitrile, dimethylformamide, dimethylacetamide, 1,2-dimethoxyethane, 1,2-diethoxyethane, tetrahydrafuran, 2-methyltetrahydrofuran, dioxolane, and methyl acetate, or mixtures of two or more kinds of these solvents. Examples of an electrolyte salt include salts containing lithium such as $LiClO_4$, $LiPF_6$, $LiBF_4$, $LiAsF_6$, $LiSbF_6$, $LiCF_3CO_2$, $LiPF_6SO_3$, $LiN(SO_2CF_3)_2$, $LiN(SO_2CF_2CF_3)_2$, $LiN(COCF_3)_2$, $LiN(COCF_2CF_3)_2$, and lithium bis(oxalato)borate ($LiB(C_2O_4)_2$). Complexes, including an organic acid lithium salt-boron trifluoride complex and a complex hydride such as $LiBH_4$ can also be mentioned. These salts or complexes may be used singly or in combination of two or more.

The electrolyte may be a gel electrolyte that further contains a polymer compound in the electrolytic solution. Examples of a polymer compound include fluorinated polymers such as polyvinylidene fluoride and polyacrylic polymers such as polymethyl(meth)acrylate. The gel electrolyte may be used as a separator.

The electrolyte may be arranged between the negative electrode and the positive electrode. For example, the electrolyte is filled in a battery cell in which the negative electrode and the positive electrode or the negative electrode,

the positive electrode, and the separator described above are housed inside. The electrolyte may be, for example, coated on the negative electrode or the positive electrode and placed between the negative electrode and the positive electrode.

## EXAMPLES

The present invention will be specifically described below with reference to Examples and Comparative Examples. However, the present invention is not limited to these Examples.

[Synthesis of Polyvinylphosphonic acid]

To a 500-mL flask, 120.0 g of vinylphosphonic acid (manufactured by Maruzen Petrochemical Co., Ltd.) as a monomer and 72.3 g of ionexchange water as a polymerization solvent were added, followed by thorough mixing. In addition, 4.5 g of 2,2-azobis(2-methylpropionamidine) dihydrochloride (manufactured by FUJIFILM Wako Pure Chemical Corporation; hereinafter "AIBA") as polymerization initiator and 27.8 g of ion exchange water were added and stirring was performed until AIBA was dissolved. Subsequently, the flask charged with the monomer was immersed in a preheated water bath. When the internal temperature reached 69°C, the polymerization initiator solution was added dropwise, thereby initiating a polymerization reaction. The polymerization initiator solution was added dropwise over 6 hours and aged for 2 hours after the completion of the dropwise addition. The temperature of the water bath was adjusted as appropriate such that the reaction solution temperature was 70°C $\pm$ 2°C during the polymerization. After completion of the polymerization, 169.2 g of ion exchange water was added and mixed well, and the reaction was stopped by cooling the flask in an ice bath, thereby obtaining a slightly yellow transparent liquid polymer. The inversion rate of vinylphosphonic acid was 94.6%, and Mw was 10,200.

[Production of Lithium-Ion Secondary Battery Negative Electrode]

[Example 1]

A binder composition was produced by mixing 80% by mass of polyvinylphosphonic acid (P0P) and 20% by mass of carboxymethyl cellulose (CMC).

Subsequently, 25% by mass of the binder composition, 15% by mass of acetylene black (AB), 30% by mass of Silicon (Si), and 30% by mass of graphite (G) were added, followed by stirring for 12 hours. Thus, a negative electrode composition was produced.

The obtained negative electrode composition was coated on a copper foil as a negative electrode current collector such that the film thickness was 10 $\mu$m. The coating film was dried with a vacuum dryer at 80°C for 6 hours. Thereafter, the coating film was pressed with a roller at 80°C for 3 hours and then punched out into a circle with a diameter of 15 mm, which is the electrode size, thereby obtaining a negative electrode having a negative electrode active material.

[Example 2]

A binder composition and a lithium-ion secondary battery negative electrode were produced in the same manner as in Example 1 except that 30% by mass of silicon monoxide (SiO) was blended instead of silicon.

[Comparative Example 1]

A binder composition and a lithium-ion secondary battery negative electrode were produced in the same manner as in Example 1 except that 20% by mass of polyacrylic acid (PAA) was blended instead of polyvinylphosphonic acid.

[Comparative Example 2]

A binder composition and a lithium-ion secondary battery negative electrode were produced in the same manner as in Example 2 except that 20% by mass of polyacrylic acid was blended instead of polyvinylphosphonic acid.

[Comparative Example 3]

A binder composition and a lithium-ion secondary battery negative electrode were produced in the same manner as in Example 1 except that 20% by mass of polyvinylidene fluoride (PVdF) was blended instead of polyvinylphosphonic acid.

[Comparative Example 4]

A binder composition and a lithium-ion secondary battery negative electrode were produced in the same manner as in Example 2 except that 20% by mass of polyvinylidene fluoride was blended instead of polyvinylphosphonic acid.

[Comparative Example 5]

A binder composition and a lithium-ion secondary battery negative electrode (composition: Si: 37.5% by mass; G: 37.5% by mass; AB: 18.75%; CMC: 6.25%) were produced in the same manner as in Example 1 except that polyvinylphosphonic acid was not blended.

[Comparative Example 6]

A binder composition and a lithium-ion secondary battery negative electrode (composition: SiO: 37.5% by mass; G: 37.5% by mass; AB: 18.75%; CMC: 6.25%) were produced in the same manner as in Example 2 except that polyvinylphosphonic acid was not blended.
CMC was the only polymer compound in the binder composition, and thus the adhesive strength of the composition was insufficient, making it impossible to prepare a stable negative electrode in Comparative Examples 5 and 6.
Table 1 shows a list of formulations of the lithium-ion secondary battery negative electrodes produced in Examples 1 and 2 and Comparative Examples 1 to 6 described above.

[Table 1]

| | Si | SiO | G | AB | P0P | PAA | PVdF | CMC | Total (parts by mass) |
|---|---|---|---|---|---|---|---|---|---|
| Example 1 | 30 | 0 | 30 | 15 | 20 | 0 | 0 | 5 | 100 |
| Example 2 | 0 | 30 | 30 | 15 | 20 | 0 | 0 | 5 | 100 |
| Comparative Example 1 | 30 | 0 | 30 | 15 | 0 | 20 | 0 | 5 | 100 |
| Comparative Example 2 | 0 | 30 | 30 | 15 | 0 | 20 | 0 | 5 | 100 |
| Comparative Example 3 | 30 | 0 | 30 | 15 | 0 | 0 | 20 | 5 | 100 |
| Comparative Example 4 | 0 | 30 | 30 | 15 | 0 | 0 | 20 | 5 | 100 |
| Comparative Example 5 | 37.5 | 0 | 37.5 | 18.75 | 0 | 0 | 0 | 6.25 | 100 |
| Comparative Example 6 | 0 | 37.5 | 37.5 | 18.75 | 0 | 0 | 0 | 6.25 | 100 |

[Evaluation of Lithium-Ion Secondary Battery Negative Electrode]

(Production of Half-Cell)

Next, a half-cell shown in FIG. 1 was assembled by stacking an upper cover 1, a wave washer 2, a stainless steel plate 3, a negative electrode 4 produced in each of Examples 1 and 2 and Comparative Examples 1 and 4, an O-ring 5, a separator 6 (Celgard Monolayer PP2500 (manufactured by CELGARD)), a counter electrode lithium (Li) 7, and a lower cover 8 in that order.
An attempt was made to manufacture a half-cell using the negative electrodes of Comparative Examples 5 and 6. However, with CMC alone, the adhesive strength was insufficient, and it was impossible to prepare a test electrode. Thus, it was impossible to form a half-cell.

(Preparation of Electrolytic Solution)

An electrolytic solution was prepared by dissolving 1 mol/L of lithium hexafluorophosphate ($LiPF_6$) as an electrolyte salt in a solvent in which ethylene carbonate (EC) and diethylene carbonate (DEC) were mixed at a volume ratio of 1:1. The following charge-discharge test was performed using the prepared electrolytic solution.

(Charge-Discharge Test)

The half-cells produced above were stabilized by standing for 6 hours, following which a charge-discharge test

was performed at a charge-discharge rate of 1C. This charge-discharge operation was defined as one cycle and performed for 200 cycles. The discharge capacity was measured after 100 and 200 cycles. In addition, the capacity retention rate (%) for from 100 to 200 cycles was defined and calculated by the following formula. Table 2 shows the charge-discharge test results of Examples 1 and 2 and Comparative Examples 1 to 4.

·Capacity retention rate (%) = Discharge capacity after 200 cycles (mAh/g)/Discharge capacity after 100 cycles (mAh/g) × 100

[Table 2]

| | Binder | Negative electrode active material | Discharge capacity after 100 cycles (mAh/g) | Discharge capacity after 200 cycles (mAh/g) | Capacity retention rate (%) |
|---|---|---|---|---|---|
| Example 1 | P0P+ CMC | Si/C | 1195.7 | 1041.7 | 87.1 |
| Example 2 | P0P+ CMC | SiO/C | 1466.7 | 1183.3 | 80.7 |
| Comparative Example 1 | PAA+ CMC | Si/C | 346.6 | 226.7 | 65.4 |
| Comparative Example 2 | PAA+ CMC | SiO/C | 1328.2 | 855.8 | 64.4 |
| Comparative Example 3 | PVdF+ CMC | Si/C | 760.7 | 456.3 | 60.0 |
| Comparative Example 4 | PVdF+ CMC | SiO/C | 872.5 | 580.1 | 66.5 |
| Comparative Example 5 | CMC | Si/C | Impossible to form half-cell | | |
| Comparative Example 6 | CMC | SiO | | | |

As a result of the charge-discharge test described above, it was found that the half-cell, in which a binder composition containing polyvinylphosphonic acid (P0P) and carboxymethyl cellulose (CMC) as in Examples 1 and 2 is used, deteriorates more slowly and is more excellent in capacity retention rate (cycle characteristics) than the half-cell, in which a binder composition containing no polyvinylphosphonic acid as in Comparative Examples 1 to 4 is used. Further, regardless of the type of binder, the half-cell using SiO-C as the negative electrode active material provided a higher discharge capacity than the half-cell using Si-C as the negative electrode active material. This is thought to be because as SiO is amorphous, the probability of contact between the electrodes increases, making it easier for $Li^+$ to be intercalated.

In addition, when graphite and a Si compound are mixed in equal amounts, the theoretical capacity is about 2,200 mAh/g for Si-C and about 1,200 mAh/g for SiO-C. Therefore, a half-cell containing P0P and CMC as the binder and using SiO-C as the negative electrode active material exhibited a discharge capacity that was approximately the theoretical capacity.

REFERENCE SIGNS LIST

1: Upper cover
2: Wave washer
3: Stainless steel plate
4: Negative electrode
5: O-ring

6: Separator
7: Counter electrode lithium (Li)
8: Lower cover

## Claims

1. A binder composition for a lithium-ion secondary battery negative electrode, which is **characterized by** containing a vinylphosphonic acid- or vinylphosphonic acid ester-derived vinyl phosphorus polymer and a cellulose-based water-soluble polymer.

2. The binder composition for a lithium-ion secondary battery negative electrode according to claim 1, wherein the vinyl phosphorus polymer is represented by the following Formula (1):

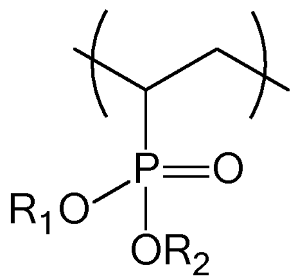

(1)

(in Formula (1), $R_1$ and $R_2$ each independently represent a hydrogen atom or a substituted or unsubstituted alkyl group having from 1 to 6 carbon atoms, provided that when $R_1$ and $R_2$ are alkyl groups, $R_1$ and $R_2$ may form a ring together with an oxygen atom and a phosphorus atom in Formula (1)).

3. The binder composition for a lithium-ion secondary battery negative electrode according to claim 1 or 2, wherein the vinyl phosphorus polymer is polyvinylphosphonic acid or dimethyl polyvinylphosphonate.

4. The binder composition for a lithium-ion secondary battery negative electrode according to any one of claims 1 to 3, wherein the vinyl phosphorus polymer is polyvinylphosphonic acid.

5. The binder composition for a lithium-ion secondary battery negative electrode according to any one of claims 1 to 4, wherein the cellulose-based water-soluble polymer is carboxymethyl cellulose.

6. A lithium-ion secondary battery negative electrode comprising a negative electrode active material, a binder, and a conductive aid, wherein

   the negative electrode active material is composed of any one of a carbon material, a silicon compound, and a mixture of a carbon material and a silicon compound,
   the binder is composed of the binder composition for a lithium-ion secondary battery negative electrode according to any one of claims 1 to 5, and
   the conductive aid is fine carbonaceous particles.

7. The lithium-ion secondary battery negative electrode according to claim 6, wherein the conductive aid is acetylene black.

8. A lithium-ion secondary battery comprising a positive electrode and the negative electrode according to claim 6 or 7.

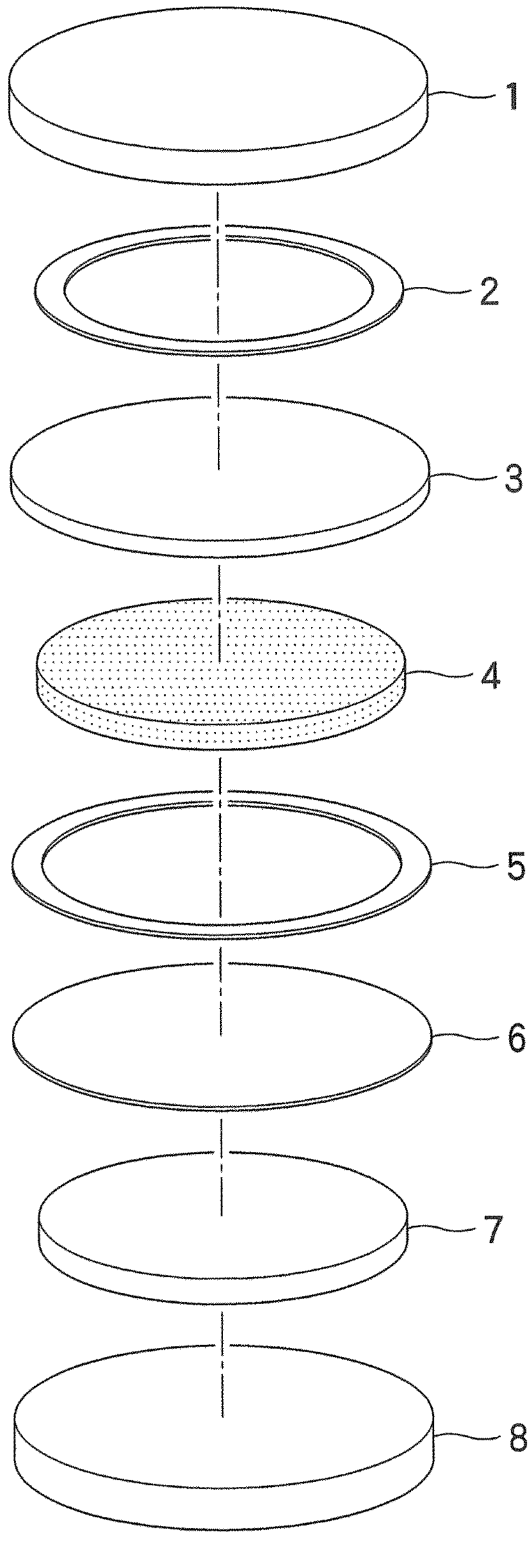


Fig. 1

**INTERNATIONAL SEARCH REPORT**

International application No.
**PCT/JP2022/011175**

**A. CLASSIFICATION OF SUBJECT MATTER**

***H01M 4/62***(2006.01)i; ***C08L 1/00***(2006.01)i; ***C08L 43/02***(2006.01)i; ***H01M 4/13***(2010.01)i; ***H01M 4/133***(2010.01)i; ***H01M 4/36***(2006.01)i
FI: H01M4/62 Z; H01M4/133; H01M4/13; H01M4/36 E; C08L43/02; C08L1/00

According to International Patent Classification (IPC) or to both national classification and IPC

**B. FIELDS SEARCHED**

Minimum documentation searched (classification system followed by classification symbols)

H01M4/62; C08L1/00; C08L43/02; H01M4/13; H01M4/133; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2013-179041 A (FUJIFILM CORP.) 09 September 2013 (2013-09-09) claims 1, 12, paragraphs [0037], [0070], [0074], [0091] | 1, 5, 6-8 |
| A | US 2018/0175366 A1 (FLORIDA STATE UNIVERSITY RESEARCH FOUNDATION, INC.) 21 June 2018 (2018-06-21) | 1-8 |
| A | US 2020/0295344 A1 (KOREA ELECTROTECHNOLOGY RESEARCH INSTITUTE) 17 September 2020 (2020-09-17) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/011175**

| Patent document cited in search report | Publication date (day/month/year) | Patent family member(s) | Publication date (day/month/year) |
|---|---|---|---|
| JP 2013-179041 A | 09 September 2013 | WO 2013/115264 A1 | |
| US 2018/0175366 A1 | 21 June 2018 | WO 2016/210419 A1 | |
| US 2020/0295344 A1 | 17 September 2020 | WO 2019/112194 A1 | |
| | | KR 10-2019-0065747 A | |
| | | CN 111433153 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015159935 A
- JP 6198687 B